# EUROPEAN PATENT APPLICATION

(11) **EP 4 188 032 A1**
(43) Date of publication of application: **31.05.2023**
(21) Application number: 22210116.4
(22) Date of filing: 29.11.2022
(51) Int. Cl.: H04W 76/34, H04W 8/18, H04W 76/27

(54) **METHOD AND APPARATUS TO REDUCE POWER CONSUMPTION FOR DEVICE WITH MULTIPLE SIM CARD**

(30) Priority: 30.11.2021 US 202163284024 P; 27.10.2022 US 202217975552
(71) Applicant: MediaTek Inc., Hsinchu City 30078 (TW)
(72) Inventor: TSAI, Chun-Fan, Hsinchu City (TW); HSU, Chia-Chun, Hsinchu City (TW)
(74) Representative: Hoefer & Partner Patentanwälte mbB

(57) **Abstract**

A method of UE-initiated radio resource control, RRC, connection release procedure in LTE/5G network is proposed. A UE is required to establish RRC connection and enter RRC_Connected state for data communication (501). However, power consumption from functions for UE mobility can be significant, especially in RRC_Connected state. It is thus desirable for the UE to be able leave the RRC_Connected state (503, 504) by triggering an RRC connection release procedure (502). The triggering conditions may include: 1) UE has no data transmission for quite some time; 2) UE is in low battery status; 3) UE has incoming voice/video call from another USIM; or 4) UE has outgoing voice/video call in another USIM.

## Description

### CROSS REFERENCE TO RELATED APPLICATION

This application claims priority under 35 U.S.C. §119 from U.S. Provisional Application Number 63/284,024 entitled "Method and Apparatus to Reduce Power Consumption for Device with Multiple SIM Card," filed on November 30, 2021, the subject matter of which is incorporated herein by reference.

### TECHNICAL FIELD

The disclosed embodiments relate generally to wireless communication systems, and, more particularly, to reduce UE power consumption by leaving Radio Resource Control (RRC) connected state.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA, and Universal Mobile Telecommunication System (UMTS). In LTE systems, an evolved universal terrestrial radio access network (E-UTRAN) includes a plurality of evolved Node-Bs (e.g., eNodeBs or eNBs) communicating with a plurality of mobile stations, referred to as user equipments (UEs). The 3^{rd} generation partner project (3GPP) network normally includes a hybrid of 2G/3G/4G systems. The Next Generation Mobile Network (NGMN) board has decided to focus the future NGMN activities on defining the end-to-end requirements for 5G new radio (NR) systems. The base stations in 5G NR systems are referred to as Next Generation Node-Bs (e.g., gNodeBs or gNBs).

Typically, each UE needs to periodically measure the received signal quality of the serving cell and neighbor cells and reports the measurement result to its serving eNB for potential handover or cell reselection. The measurements may drain the UE battery power. In order to keep UE battery consumption low, the UE needs to toggle between sleeping and awake states. Preferably it should be possible for UEs in RRC_Connected state to apply similar sleep/awake performance as in RRC_Idle state, to have battery consumption as in RRC_Idle state. To save power, Discontinuous Reception (DRX) needs to be used in Connected state, with short awake times and long sleep cycles. With DRX extension, UEs can be configured with even longer RRC_Connected state DRX cycle.

Despite the benefit of power saving under DRX and DRX extension, UE power consumption from functions for UE mobility can still be significant, especially in RRC_Connected state, which is required for data transmission. After entering RRC_Connected state, the UE could only leave RRC_Connected state under network control. This is because the RRC states should be synchronized between the UE and network. Therefore, it is not preferable for UE to transit to Idle state by itself. However, it is observed from real network that the network may keep the UE in RRC_Connected state even when there is no data transmission or reception for quite some time, which may cause high UE power consumption. Therefore, it is desired to have an RRC release procedure that could be triggered by the UE. In addition, for UE with multiple USIM card, the UE may want to leave the RRC_Connected state in one USIM card for activities on another USIM card.

A UE-initiated RRC connection release procedure for UE to leave the RRC_Connected state is thus desired for UE power saving as well as for UEs supporting multiple USIM card (MUSIM).

### SUMMARY

A method of UE-initiated radio resource control (RRC) connection release procedure in LTE/5G network is proposed. A UE is required to establish RRC connection and enter RRC_Connected state for data communication. However, power consumption from functions for UE mobility can be significant, especially in RRC_Connected state. It is thus desirable for the UE to be able leave the RRC_Connected state in certain circumstances, by triggering an RRC connection release procedure. The triggering conditions may include: 1) UE has no data transmission for quite some time; 2) UE is in low battery status; 3) UE has incoming voice/video call from another USIM; or 4) UE has outgoing voice/video call in another USIM. If one of the conditions is met, the UE sends an RRC message to inform the network that the UE wants to leave the RRC_Connected state and to initiate an RRC connection release procedure. In one example, UE receives an RRC connection release message from the network and releases the RRC connection and enters RRC_Idle or RRC_Inactive state accordingly. In another example, UE does not receive the RRC connection release message in time, so it locally releases the RRC connection and enters Idle state upon timer expiry. A method and a user equipment according to the invention are defined in the independent claims. The dependent claims define preferred embodiments thereof.

In one embodiment, a UE establishes a radio resource control (RRC) connection in a wireless communication network, wherein the UE is in RRC_Connected state. The UE evaluates a condition for UE-initiated RRC connection release procedure is satisfied. The UE transmits an RRC message that comprises a leave indication indicating that the UE prefers to leave RRC_Connected state. The UE releases the established RRC connection and leaves the RRC_Connected state upon receiving an RRC connection release message from the network.

Other embodiments and advantages are described in the detailed description below. This summary does not purport to define the invention. The invention is defined by the claims.

### BRIEF DESCRIPTION OF THE DRAWINGS

The accompanying drawings, where like numerals indicate like components, illustrate embodiments of the invention.
Figure 1 illustrates a user equipment (UE) that supports UE-initiated RRC connection release to enter RRC_IDLE/Inactive state for reducing power consumption in an EPS/5GS network in accordance with one novel aspect.
Figure 2 is a simplified block diagram of a UE and a base station in accordance with various embodiments of the present invention.
Figure 3 illustrates one embodiment of a UE-initiated RRC connection release procedure in LTE/5G network in accordance with one novel aspect.
Figure 4 illustrates another embodiment of a UE-initiated RRC connection release procedure in LTE/5G network in accordance with one novel aspect.
Figure 5 is a flow chart of a method of UE-initiated RRC connection release procedure for reducing power consumption in LTE/5G network in accordance with one novel aspect of the present invention.

### DETAILED DESCRIPTION

Reference will now be made in detail to some embodiments of the invention, examples of which are illustrated in the accompanying drawings.

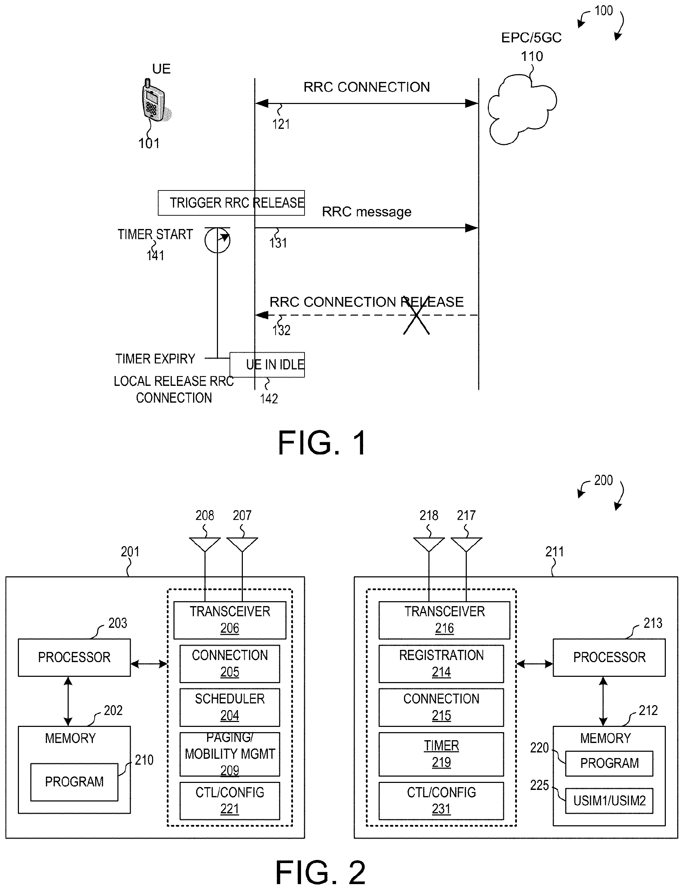

Figure 1 illustrates a user equipment (UE) that supports UE-initiated radio resource control (RRC) connection release to enter RRC_IDLE/Inactive state for reducing power consumption in an EPS/5GS network 100 in accordance with one novel aspect. In 3GPP NR, 5G NR access network (a plurality of base stations, e.g., Next Generation Node-Bs (gNBs), communicating with a plurality of mobile stations referred as user equipment (UEs). Orthogonal Frequency Division Multiple Access (OFDMA) has been selected for NR downlink (DL) radio access scheme due to its robustness to multipath fading, higher spectral efficiency, and bandwidth scalability. In both LTE and NR networks, Physical Downlink Control Channel (PDCCH) is used for downlink scheduling. Physical Downlink Shared Channel (PDSCH) is used for downlink data. Similarly, Physical Uplink Control Channel (PUCCH) is used for carrying uplink control information. Physical Uplink Shared Channel (PUSCH) is used for uplink data.

The RRC sublayer consists of control-plane set of protocols for connection control and setup, system configuration, mobility management, and security establishment. LTE has specified two RRC states, i.e., RRC_Idle state and RRC_Connected state to avoid unnecessary signaling. When UE does not have any data to send it is said to be in RRC_Idle state, and when data is being sent or communication is taken place then the UE is said to be in RRC_Connected state. An RRC connection establishment procedure is used to make transition from RRC_Idle mode to RRC_Connected state. An RRC connection release procedure is used to transition from RRC_Connected state back to RRC_Idle state. In 5G, a new RRC state called "RRC_Inactive" is introduced to minimize latency as well as to reduce signaling overhead. Transition from RRC_Inactive to RRC_Connected is very quick as UE context is stored at both gNB and UE. The RRC state should be synchronized between UE and network. Therefore, it is not preferable that UE makes RRC state transition by itself.

In order to keep UE battery consumption low, the UE needs to toggle between sleeping and awake states. To save power, Discontinuous Reception (DRX) needs to be used in Connected state as well as in Idle state, with short awake times and long sleep cycles. With DRX extension, UEs can be configured with even longer RRC_Connected state DRX cycle. Despite the benefit of power saving under DRX and DRX extension, UE power consumption from functions for UE mobility can still be significant, especially in RRC_Connected state. It is observed from real network that the network may keep the UE in RRC_Connected state even when there is no data transmission or reception for quite some time, which may cause high UE power consumption. In addition, for UE with multiple universal subscriber identity module (MUSIM) card, the UE may want to leave the RRC_Connected state in one USIM card for more important activities on another USIM card.

In accordance with one novel aspect, a method of UE-initiated RRC connection release procedure is proposed for UE to leave RRC_Connected state. In the example of Figure 1, UE 101 establishes an RRC connection with EPC/5GC 110 and enters RRC_Connected state (121). Later on, UE 101 is triggered to release the RRC connection and to leave the RRC_Connected state, by sending an RRC signaling message to indicate that UE 101 prefers to leave the Connected state (131). Meanwhile, UE 101 also starts a timer (141). In one example, UE 101 receives an RRC connection release message from the network (132), and releases the RRC connection, enters RRC_Idle or RRC_Inactive state accordingly. In another example, UE 101 does not receive the RRC connection release message in time, so it locally releases the RRC connection and enters Idle state upon timer expiry (142).

Figure 2 is a simplified block diagram of wireless devices 201 and 211 in accordance with embodiments of the present invention. For wireless device 201 (e.g., a base station), antennae 207 and 208 transmit and receive radio signal. RF transceiver module 206, coupled with the antennae, receives RF signals from the antennae, converts them to baseband signals and sends them to processor 203. RF transceiver 206 also converts received baseband signals from the processor, converts them to RF signals, and sends out to antennae 207 and 208. Processor 203 processes the received baseband signals and invokes different functional modules and circuits to perform features in wireless device 201. Memory 202 stores program instructions and data 210 to control the operations of device 201.

Similarly, for wireless device 211 (e.g., a user equipment), antennae 217 and 218 transmit and receive RF signals. RF transceiver module 216, coupled with the antennae, receives RF signals from the antennae, converts them to baseband signals and sends them to processor 213. The RF transceiver 216 also converts received baseband signals from the processor, converts them to RF signals, and sends out to antennae 217 and 218. Processor 213 processes the received baseband signals and invokes different functional modules and circuits to perform features in wireless device 211. Memory 212 stores program instructions and data 220 and multiple USIM cards 225 (e.g., USIM1 and USIM2) to control the operations of the wireless device 211.

The wireless devices 201 and 211 also include several functional modules and circuits that can be implemented and configured to perform embodiments of the present invention. In the example of Figure 2, wireless device 201 is a base station that includes an RRC connection handling module 205, a scheduler 204, a paging and mobility management module 209, and a control and configuration circuit 221. Wireless device 211 is a UE that includes a connection handling module 215, a registration module 214, a paging and mobility handling module 219, and a control and configuration circuit 231. Note that a wireless device may be both a transmitting device and a receiving device. The different functional modules and circuits can be implemented and configured by software, firmware, hardware, and any combination thereof. The function modules and circuits, when executed by the processors 203 and 213 (e.g., via executing program codes 210 and 220), allow base station 201 and UE 211 to perform embodiments of the present invention.

In one example, the base station 201 establishes signaling connection with the UE 211 via connection handling circuit 205, schedules downlink and uplink transmission for UEs via scheduler 204, performs paging, mobility, and handover management via mobility management module 209, and provides control and configuration information to UEs via configuration circuit 221. The UE 211 performs registration with the network via registration module 214, establishes RRC connection via connection handling circuit 215, maintains timer 219, and obtains configuration information via control and configuration circuit 231. In one novel aspect, UE 211 detects a triggering condition for initiating an RRC connection release procedure such that the UE can leave the RRC_Connected state. In one example, UE 211 can reduce power consumption by leaving the RRC_Connected state. In another example, UE 211 can leave the RRC_Connected state in one USIM card (USIM1) for more important activities on another USIM card (USIM2).

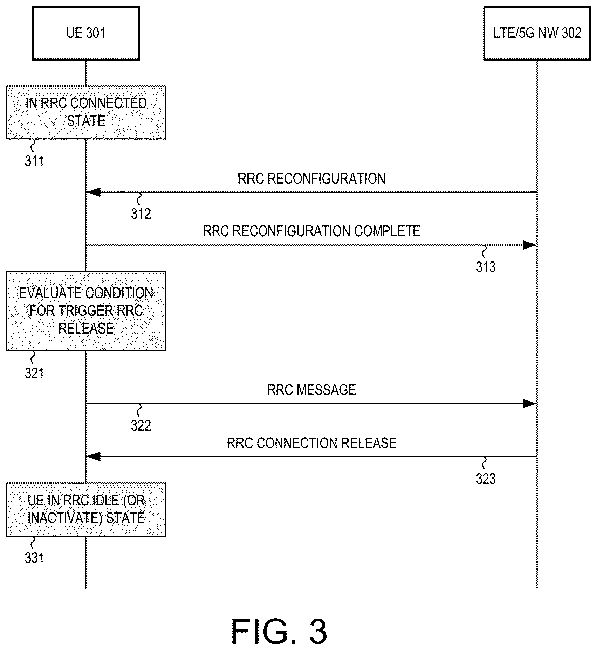

Figure 3 illustrates one embodiment of a UE-initiated RRC connection release procedure in LTE/5G network in accordance with one novel aspect. In step 311, UE 301 establishes an RRC connection in LTE/5G network 302 and enters RRC_Connected state, which is required for data transmission. After entering RRC_Connected state, typically, the UE could only leave RRC_Connected state under network control. This is because the RRC states should be synchronized between the UE and the network. Therefore, it is not preferable for UE to transit to RRC_Idle or Inactive state by itself. However, the UE power consumption from functions for UE mobility can be significant, especially in RRC_Connected state. In addition, the network may keep the UE in RRC_Connected state even when there is no data transmission or reception for quite some time. Therefore, it is desirable for the UE to be able leave the RRC_Connected state in certain circumstances, by triggering an RRC connection release procedure. Note that the UE still informs the network to avoid RRC state mismatch.

In the embodiment of Figure 3, in step 312, UE 301 receives an RRC reconfiguration message from the network. The network configures that whether the UE could provide a request to the network for leaving the RRC_Connected state, e.g., enables UE 301 for initiating an RRC connection release procedure. In step 313, UE 301 sends an RRC reconfiguration complete message back to the network, acknowledging the RRC reconfiguration. In step 321, UE 301 evaluates certain conditions for triggering an RRC connection release procedure. The conditions may include the following: 1) UE has no data transmission for quite some time; or 2) UE is in low battery status; or 3) UE has incoming voice/video call from another USIM; or 4) UE has outgoing voice/video call in another USIM. If one of the conditions are met, then UE 301 decides to leave the RRC_Connected state. In step 322, UE 301 sends an RRC message to inform the network that the UE wants to leave the RRC_Connected state and to initiate an RRC connection release procedure. In step 323, UE 301 receives an RRC connection release message from the network. In response, in step 331, UE 301 release the RRC connection and enters RRC_Idle or RRC_Inactive state, as indicated by the network in the RRC connection release message.

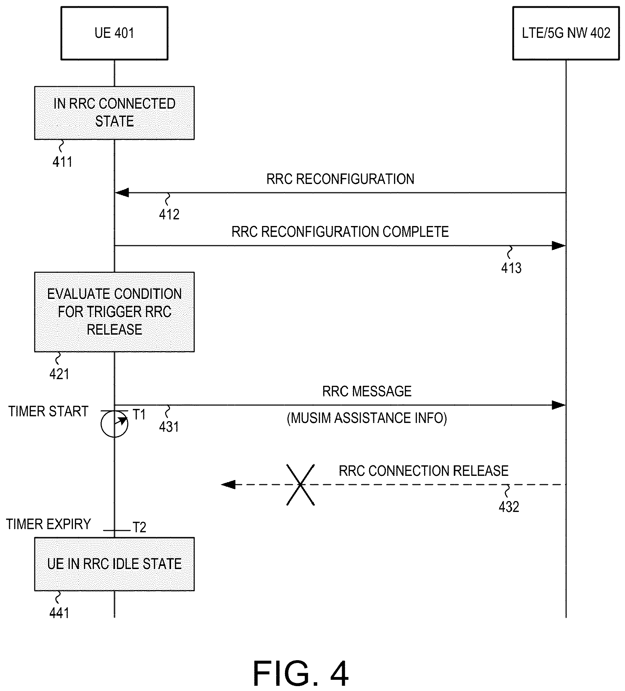

Figure 4 illustrates another embodiment of a UE-initiated RRC connection release procedure in LTE/5G network in accordance with one novel aspect. In the embodiment of Figure 4, UE 401 is a multiple universal subscriber identity module (MUSIM)-UE supporting multiple USIM cards, e.g., USIM1 and USIM2. In step 411, UE 401 establishes an RRC connection in LTE/5G network 402 and enters RRC_Connected state over a first USIM1, which is required for data transmission over USIM1. After entering RRC_Connected state, typically, the UE could only leave RRC_Connected state under network control. This is because the RRC states should be synchronized between the UE and the network. Therefore, it is not preferable for UE to transit to RRC_Idle or Inactive state by itself. However, UE 401 may need to switch a second USIM2 due to more important activities on USIM2.

The universal subscriber identity module (USIM) is one of several software applications that resides in the UE, called the universal integrated circuit card (UICC). As smartphones and services became more affordable, their users have tended to use different mobile subscriptions (i.e., USIM cards) for travel, business, and personal needs. Many UEs now support multiple USIM cards (MUSIM) for registration and operation over different USIM simultaneously. When a UE establishes a signaling connection over on a first USIM, the UE may need to switch a second USIM due to more important activities on the second USIM.

In the embodiment of Figure 4, in step 412, UE 401 receives an RRC reconfiguration message from the network. The network configures that whether the UE could provide a request to the network for leaving the RRC_Connected state, e.g., enables UE 401 for initiating an RRC connection release procedure. In step 413, UE 401 sends an RRC reconfiguration complete message back to the network, acknowledging the RRC reconfiguration. In step 421, UE 401 evaluates certain conditions for triggering an RRC connection release procedure. The conditions may include the following: 1) UE has no data transmission for quite some time; or 2) UE is in low battery status; or 3) UE has incoming voice/video call from another USIM; or 4) UE has outgoing voice/video call in another USIM. If one of the conditions is met, then UE 401 decides to leave the RRC_Connected state. In step 431, UE 401 sends an RRC message to inform the network that the UE wants to leave the RRC_Connected state and to initiate an RRC connection release procedure.

In the example of Figure 4, UE 401 establishes the RRC connection over USIM1, but now wishes to leave the RRC_Connected state because it has an incoming or outgoing call over USIM2. UE 401 may also be configured to provide MUSIM assistance information for leaving the RRC_Connected state. For example, UE may receive configuration *musim-LeaveAssistanceConfig,* for UE to report assistance information for leaving RRC_Connected for MUSIM purpose. In this case, the RRC Connection release procedure on USIM1 should be finished within a limited time duration so that the UE could complete the activities on USIM2 in time. Therefore, if UE 401 needs to leave RRC_Connected state and the timer T346g is not running, then UE 401 initiates the transmission of the UEAssistanceInformation message to provide MUSIM assistance information for leaving RRC_Connected, and UE 401 starts the timer T346g with the timer value set to the musim-LeaveWithoutResponseTimer (at time T1). If UE 401 has preference to leave RRC_Connected state, then UE 401 can set musim-PreferredRRC-State to the preferred RRC state, e.g., RRC_Idle or RRC_Inactive. At time T2, the timer T346g expired. The network may send out an RRC connection release message in step 432, but it was never received by the UE, or the network has never sent out any RRC connection release message. Upon the expiry of T346g, in step 441, UE 401 releases the RRC connection and enters RRC_Idle state.

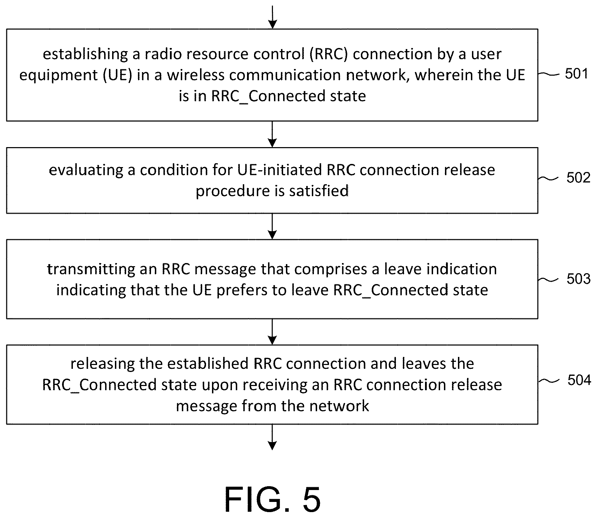

Figure 5 is a flow chart of a method of UE-initiated RRC connection release procedure for reducing power consumption in LTE/5G network in accordance with one novel aspect of the present invention. In step 501, a UE establishes a radio resource control (RRC) connection in a wireless communication network, wherein the UE is in RRC_Connected state. In step 502, the UE evaluates a condition for UE-initiated RRC connection release procedure is satisfied. In step 503, the UE transmits an RRC message that comprises a leave indication indicating that the UE prefers to leave RRC_Connected state. In step 504, the UE releases the established RRC connection and leaves the RRC_Connected state upon receiving an RRC connection release message from the network. In one example, the UE enters RRC_Idle state or RRC_Inactive state as indicated by the RRC connection release message. In another example, the UE locally releases the RRC connection and enters RRC_Idle state upon timer expiry.

Although the present invention is described above in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method, comprising:
establishing a radio resource control, in the following also referred to as RRC, connection by a user equipment, in the following also referred to as UE, in a wireless communication network, wherein the UE is in RRC_Connected state (501);
evaluating a condition for UE-initiated RRC connection release procedure is satisfied (502);
transmitting an RRC message that comprises a leave indication indicating that the UE prefers to leave the RRC_Connected state (503); and
releasing the established RRC connection and leaves the RRC_Connected state upon receiving an RRC connection release message from the network (504).

2. A User Equipment, in the following also referred to as UE, (211), comprising:
a radio resource control, in the following also referred to as RRC, connection handling circuit (215) that establishes an RRC connection in a wireless communication network, wherein the UE (211) is in RRC_Connected state;
an RRC state handling circuit (231) that evaluates a condition for UE-initiated RRC connection release procedure is satisfied;
a transmitter (216) that transmits an RRC message that comprises a leave indication indicating that the UE (211) prefers to leave RRC_Connected state; and
a receiver (216) that receives an RRC connection release message from the network, wherein the UE (211) releases the established RRC connection and leaves the RRC_Connected state upon receiving the RRC connection release message from the network.

3. The method of Claim 1, or the UE of Claim 2, wherein the condition comprises the UE has no data for transmission for a predefined time period.

4. The UE method of Claim 1 or 3, or the of Claim 2 or 3, wherein the condition comprises the UE is in a low battery status.

5. The method of Claim 1, 3 or 4, or the UE of any one of Claims 2 to 4, wherein the UE supports multiple universal subscriber identity module, in the following also referred to as USIM, and wherein the RRC connection is established on a first USIM.

6. The method or the UE of Claim 5, wherein the condition comprises the UE has an incoming call from a second USIM or has an outgoing call in the second USIM.

7. The method of any one of Claims 1 and 3 to 6, or the UE of any one of Claims 2 to 6, wherein the UE is configured to provide USIM assistance information to the network via the leave indication.

8. The method of any one of Claims 1 and 3 to 7, or the UE of any one of Claims 2 to 7, wherein the UE enters RRC_Idle state or RRC_Inactive state as indicated by the RRC connection release message.

9. The method of any one of Claims 1 and 3 to 8, or the UE of any one of Claims 2 to 8, wherein the UE starts a timer upon sending the RRC message.

10. The method or the UE of Claim 9, wherein the UE locally releases the RRC connection and enters RRC_Idle state upon the timer expiry.

11. The method of any one of Claims 1 and 3 to 10, or the UE of any one of Claims 2 to 10, wherein the UE receives an RRC reconfiguration from the network that enables the UE to request leaving the RRC_Connected state.
